# EUROPEAN PATENT SPECIFICATION

(11) **EP 3 243 003 B1**
(45) Date of publication and mention of the grant of the patent: **29.07.2020**
(21) Application number: 15837149.2
(22) Date of filing: 30.12.2015
(51) Int. Cl.: F03D 9/00, F03D 3/04, H02S 10/12, E04H 1/12

(54) **STAND-ALONE INTEGRATED RENEWABLE ENERGY SYSTEM**
EIGENSTÄNDIGES INTEGRIERTES SYSTEM AUS ERNEUERBARER ENERGIE
SYSTÈME D'ÉNERGIE RENOUVELABLE INTÉGRÉ AUTONOME

(30) Priority: 06.01.2015 NL 2014086
(43) Date of publication of application: 15.11.2017
(73) Proprietor: Ibis Power Holding B.V., 5617 AC Eindhoven (NL)
(72) Inventor: KISS, Diána, 5656 AE Eindhoven (NL); CHAVEZ GARCIA, Victor Manuel, 5656 AE Eindhoven (NL); SUMA, Alexander Boudewijn, 5656 AE Eindhoven (NL)
(74) Representative: Patentwerk B.V.
(86) International application number: PCT/NL2015/050921
(87) International publication number: WO 2016/111617

(56) References cited:
- WO-A1-2012/007444
- FR-A- 515 331
- FR-A1- 2 898 738
- FR-A1- 2 951 881
- US-A1- 2009 079 161
- US-A1- 2014 103 663
- US-A1- 2014 125 134
- US-A1- 2014 231 284

## Description

### Field of the invention

The invention relates to a stand-alone integrated renewable electric power station comprising a wind energy system and a solar energy system.

### Background of the invention

The present invention is in the field of renewable energy. Renewable energy typically relates to energy that comes from resources such as sunlight, wind, rain, tides, waves and geothermal heat. Renewable energy replaces today's fuels in various areas, such as electricity generation, hot water/space heating, motor fuels, and rural (off-grid) energy services. The present invention relates especially to off-grid energy services, and the energy sources preferably to wind and sunlight. It is noted that the estimated potential of worldwide solar energy exceeds the present energy worldwide energy consumption by a factor 1000, and likewise the potential of wind energy by a factor 1-5; there is abundant renewable energy and it is ready to be harvested.

The present invention makes use of a container. An intermodal container is a standardized reusable steel box. They are typically used to store and move materials and products in a containerized intermodal freight transport system. "Intermodal" indicates that the container can be moved from one mode of transport to another (from ship, to truck, etc.) without unloading and reloading the contents of the container. Lengths of containers, which each have a unique ISO 6346 reporting mark, vary from 2.438 to 17.069 m and heights from 2.438 m to 2.896 m. It is noted that for air freight alternative definitions may be used.

In various cases there may be an emerging need for energy. For instance, in developing countries a (temporarily) lack of energy causes problems e.g. in terms of development in general, in terms of health, and safety. It is therefore considered that local power generation is a basic need for e.g. quality of life, emergency aid, and may even overcome prosperity in due time. Also lack of energy may hamper community development, health and education. In another example of emergency aid, such as after a natural disaster, in case of outbreak of a disease, an infrastructure may need to be set-up in order to tackle problems adequately. In yet another example of warfare an infrastructure in a base camp needs to be set-up, typically within a short period of time.

It has been found troublesome to provide quick access to a reliable energy source in the above and similar situations.

A disadvantage of prior art systems is that typically large amounts of carbon based energy needs to be supplied as well. These systems are typically expensive in operation and maintenance, and cause environmental and health problems.

In some cases renewable energy technologies have been developed to tackle the above stated problems, but appear too limited by being only a partial solution providing wind or sun as an energy source, or require time consuming transportation and installation, and large application area requirements.

Some documents recite combined power systems.

US 2014/231284 recites a transportable, deployable power system comprising a hybrid power box containing solar panels, wind turbine(s), fuel cells, fuel reformers, and other energy sources. The system could also include waste water and potable water inlet and outlet ports for water treatment. It will also allow for shelf mounted solar and wind turbine installation for disaster recovery, backup power for telecommunication, military power, Homeland Security power, off grid homes and water and wastewater packaging domestically and internationally. The present invention is ideal for any situation requiring immediate power and/or water treatment, such as remote construction sites or in emergency situations. The hybrid power box can be mounted to a standard shipping truck, train, or ship, and transported over land to the desired location.

FR 2 951 881 A1 recites a module that has a solar generator completely covering a wind turbine, and a frame or spacers for integrating the wind turbine and a case that gathers sources energy management electronics from sources and an energy storage element or a socket. A base plate fixes the module on a surface or a mast. The solar generator, the wind turbine and the frame are integrated in order to form a coherent and monoblock assembly. The case and the base plate are placed in order not to obstruct and contrary a channeling of air flow on the wind turbine.

FR 2 898 738 A1 recites a fuel cell e.g. proton-exchange membrane cell, with hydrogen from a hydrogen bottle for constituting an electrical energy reserve. Another electrical energy reserve is constituted by a windmill or solar panel. The electrical energy is produced from the latter energy reserve by the windmill/solar panel or from the former energy reserve by the fuel cell, when the windmill/solar panel and latter reserve are in defect. An independent claim is also included for an installation for supplying an electrical energy. This system still relies on an energy supply reserve which is incorporated in the system and is therefore not a real stand-alone system.

None of the above systems can be installed quickly, e.g. within a few minutes of time.

Therefore there is a need for an improved stand-alone energy system, which overcomes one or more of the above mentioned disadvantages, without jeopardizing functionality and advantages.

### Summary of the invention

The present invention provides an improved stand-alone integrated renewable electric power station according to claim 1.

The present system provides a low cost system, which can be transported efficiently. The operating costs are low or absent. It generates both wind and solar power, which makes the energy supply more reliable over time. The combination in an integrated system also provides a significant increase in available energy being less dependent on variation in weather conditions. For a standard system the amount of energy to be harvested varies of course form location to location, depending on wind and sun conditions. It varies from approximately 4000 kWh/year to 12500 kWh/year (Aruba) or more. The solar energy portion varies from approximately 2700 kWh/year to 7000 kWh/year (Dubai) or more, and the wind energy portion varies from approximately 600 kWh/year to 7000 kWh/year (Aruba) or more. In principle the present system is also self-deployable; initial energy harvested can be used to deploy the system, such as by moving the system outwards.

The present system is also a modular system, which modules may be combined into a larger system. For instance depending on demand, more or less modules may be used.

It provides reliable and safe transportation, reducing risks of damage during transport significantly. Also in case of unsuitable weather conditions, such as storms, hurricanes, sand storms, etc. the integrated system can be moved back (automatically) into the container, thereby protecting the valuable energy system by its resilient and safe structure.

The present system can also be easily extended internally and externally, e.g. in terms of functionality, turnkey solutions, custom fit solution, etc. thereby providing a total and modular solution. The extensions can be made at a system construction location, and shipped as such to a location of use. Thereby it may provide a large variety of solutions, which are fit and adapted to different (social) problems and limitations of a use location. The system can also be multi-functional, such as providing more than one solution to more than one problem.

The present system is easy in use and easy to maintain.

As the present system is stand-alone it can also be used at distant locations. Likewise it can be used at locations without a connection to a standard power grid. For instance in many countries access to the internet and wireless communication is available, but there is no access to electric power. Such causes problems in terms of recharging electric equipment, which problems can be overcome easily with the present system.

The container used is preferably an intermodal container. The size of the container can be any of the above given sizes, or future sizes. The size is typically determined by a required output, and/or can be provided by multiple units. The container may also relate to a structure resembling the intermodal container in size and functionality.

The container when closed comprises the elements of the present integrated energy system. It comprises at least one wind energy system. The present wind energy system does not resemble typically used wind energy systems, such as wind mills, at all, but relates more to a vertical axis wind turbine (VAWT) type. General details and background of the present wind energy system may be found in the patent US 8,210,792 B2 of one of the present inventors. Further details are provided throughout the application. The present wind energy system is amongst others characterized by its relative flat structure; as such it could be mounted on a roof, or as in the present case in a container. It also relates to a modular system which can be extended easily. When installed, i.e. when wind access towards the system is provided, the wind energy system is ready for electric power production and can in principle start immediately to do so.

Attached to the wind energy system, typically on a top side thereof, is at least one PV-system. The at least one PV-system and wind energy system may be provided to one single power outlet, or to more than one power outlets. Optionally switches are provided for directing electric power to one or more power outlets.

In order to protect the present integrated system, and in particular the PC-system, at least one protection wall is provided. It is preferred to use a side of the container as such, such as a top side thereof. The protection wall is preferably deployable.

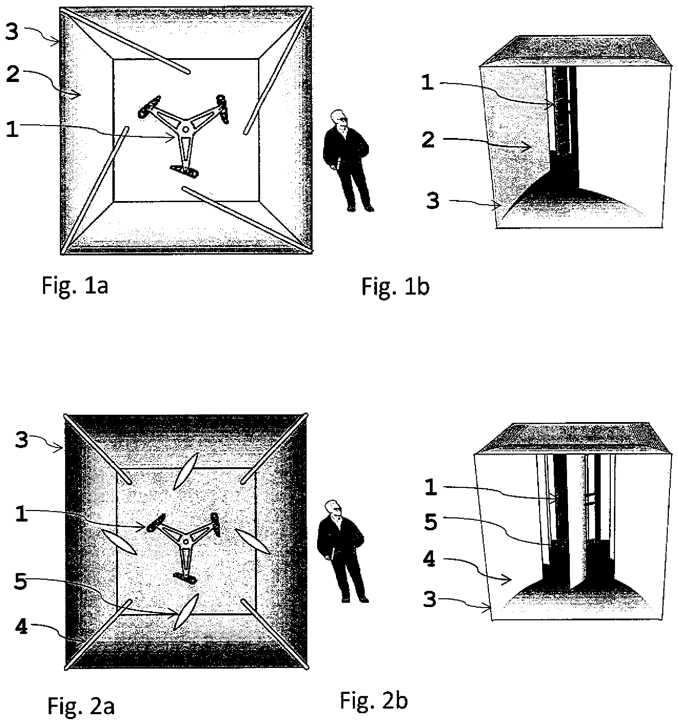

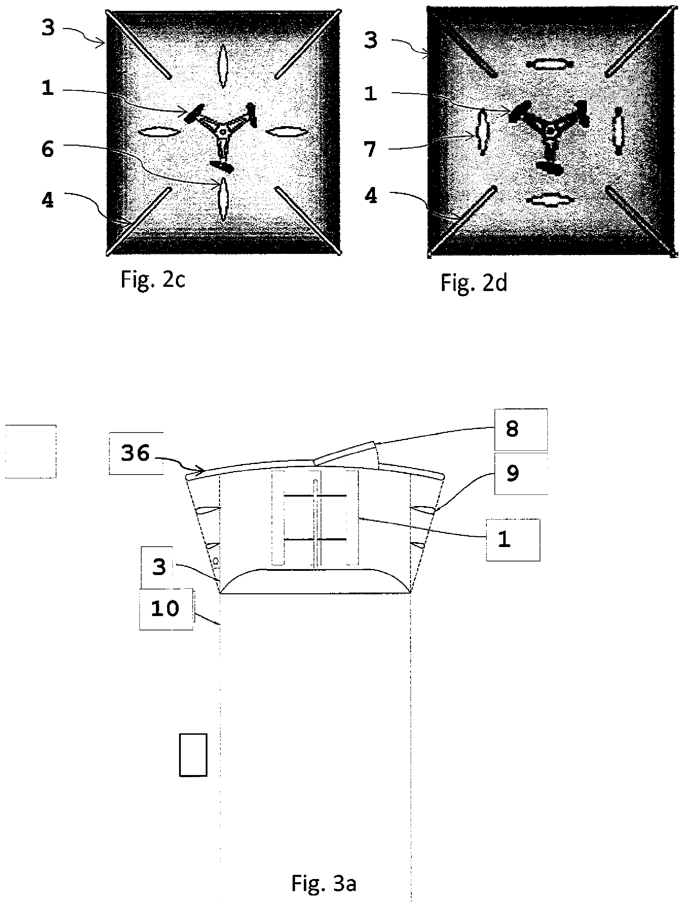

The present wind energy system comprises duct defining elements defining at least one duct. The duct directs available wind in an optimal way towards the wind turbine. The present wind energy system comprises at least one obstruction means per duct, the obstruction means being positionable in at least a start-up position (e.g. in case of transportation and storm) and a free flow position (see e.g. fig. 2).

Thereby the present invention provides a solution to one or more of the above mentioned problems.
Advantages of the present description are detailed throughout the description.

### Detailed description of the invention

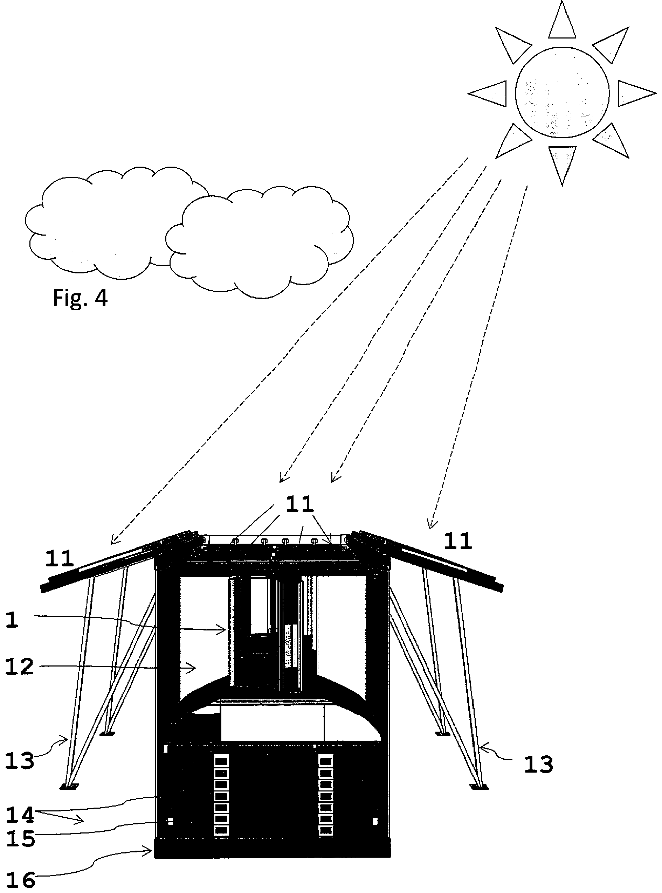

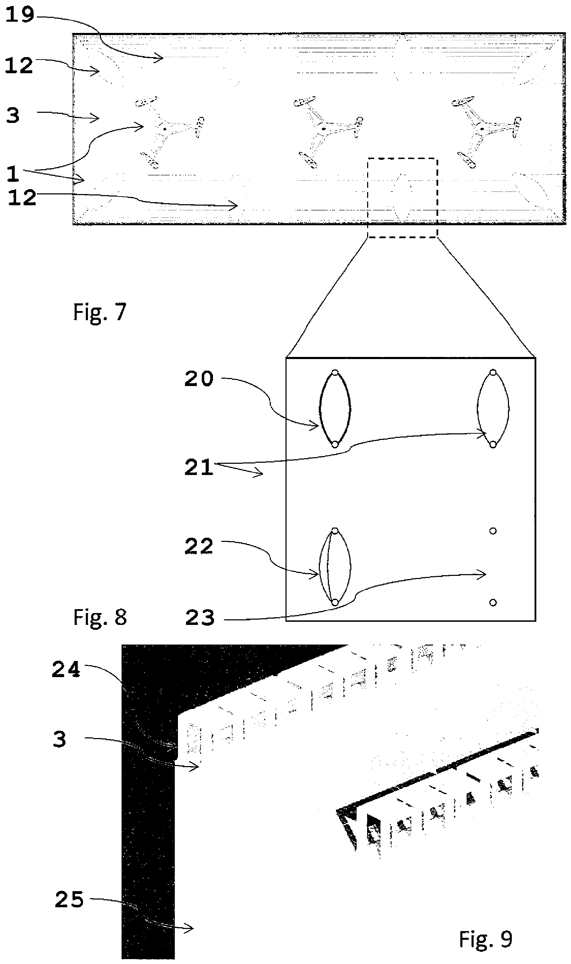

In an exemplary embodiment the present power system comprises a means for providing access to wind and sun. In an example the means are a reversibly inside-outside module for moving the power system (see e.g. fig. 4). In a further example it relates to at least one, preferably 4, expandable side walls (see e.g. fig. 9). As such the standard infrastructure of a container only needs to be adapted slightly, thereby providing extra functionality, whereas the benefits of the container remain intact.

In addition a controller and wind speed detector may be provided. The controller can be based on a detected wind speed determine an optimal position of the wind energy system, both in direction height and capturing capacity. Also if the wind speed detected is too high, the whole system can be moved to an inside of the container.

In an exemplary embodiment the present power system comprises an elevation means for moving the wind energy system reversibly inside-outside, such as a hydropneumatical mechanism, a lift, optionally comprising a counter weight, a telescopic extendable member, and a turn up system. When active, i.e. generating energy, the system is moved outside, whereas if the system is inactive, such as in case of transportation or protection against environmental conditions, the system is moved inside.

In an exemplary embodiment the present power system comprises an automated apparatus enabling self-deployment and concealment. Such can be achieved for example by human control or by automated control through external conditions measurement.

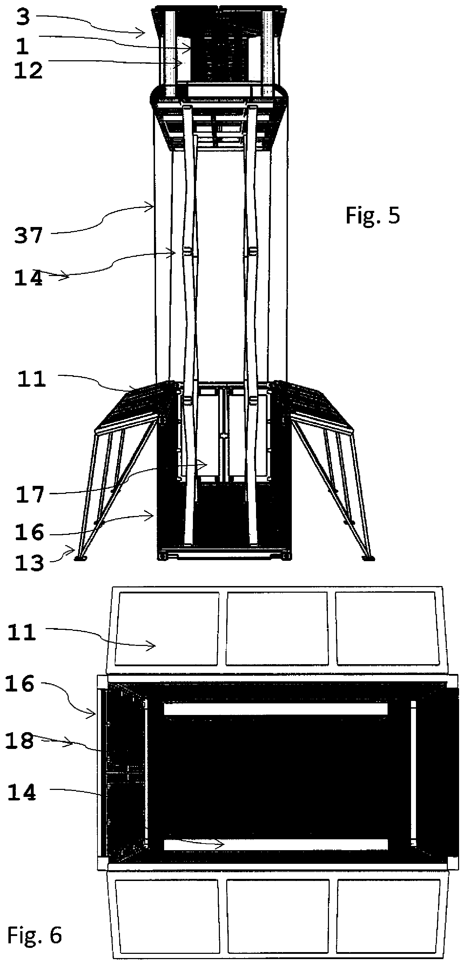

In an exemplary embodiment the present power system comprises at least one PV-system on at least one expandable top wall (see e.g. fig. 5). The top wall (or side) of the container may be in one part or in two or more parts. In closed position, on an inside of the at least one expandable top wall further PV-systems may be provided, which PV-system in open position have access to solar energy. Preferably all top wall are provided fully (as far as possible in view of space and optional other functionality) with PV-systems. The expandable top wall is preferably rotatable, such as by providing a hinge. Therewith, in open position, the PV-systems can be directed towards the sun actively, by increasing/decreasing an angle towards the sun (a perpendicular angle being preferred); as such rotation means may be provided, such as active (a controlled motor) and passive means.

In an exemplary embodiment of the present power system the wind energy system comprises at least one wind turbine, preferably 3 or more wind turbines, the wind turbine generating electric power. It further comprises duct defining elements defining at least one duct. The duct directs available wind in an optimal way towards the wind turbine. The duct comprises at least one air constriction member for accelerating an air flow towards the at least one wind turbine, at least one expansion member for releasing an air flow from the wind energy system, and optionally at least one confinement means (fig. 1). As such the wind energy is harvested in an optimal manner. Typically the wind speed can be increased by 5-70% relative to the speed of wind over land close to the container.

It is also possible to use only one duct, the duct being positioned in a direction of a dominant wind direction; such is especially beneficial if there is effectively only one wind direction. The length of a duct can be optimized for said direction, thereby increasing an amount of energy harvested.

If the wind direction varies in time, it is preferred to have two main ducts, the main ducts being substantially perpendicular to one and another, and also being symmetrical.

In addition or as an alternative diagonal walls may be provided (see e.g. fig. 2). These walls further direct the wind. In an example these walls may be partly or fully permeable to air. The permeability may be achieved by providing holes, or by providing a permeable material for the wall. As such the amount of wind energy harvested may be increased by 15% relatively.

In addition a wind outlet may comprise a diffuser, thereby also increasing an amount of energy harvested slightly.

In an exemplary embodiment of the present power system the wind energy system comprises at least one constriction member on each side thereof, respectively. The constriction member improves the flow of air towards the turbine or part thereof, such as by accelerating the flow, and thereby optimizes harvesting of wind energy. In combination, or as an alternative, the at least one constriction member and at least one expansion member are symmetrical with respect to a center point or line of the wind energy system. As such the present systems can be positioned rather randomly at a location of use, without taking into account e.g. a dominant wind direction, and still function appropriately, e.g. in terms of energy yield.

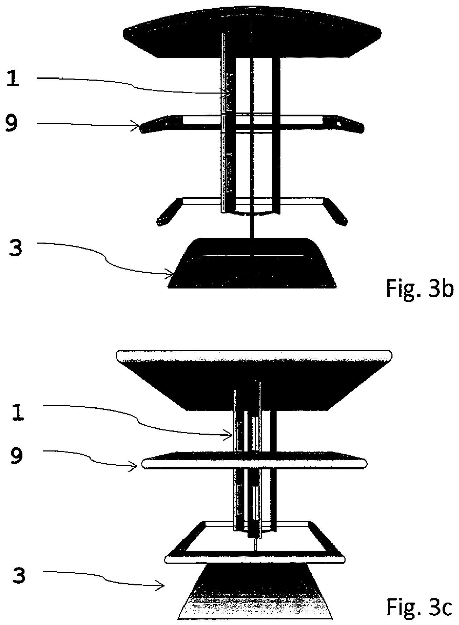

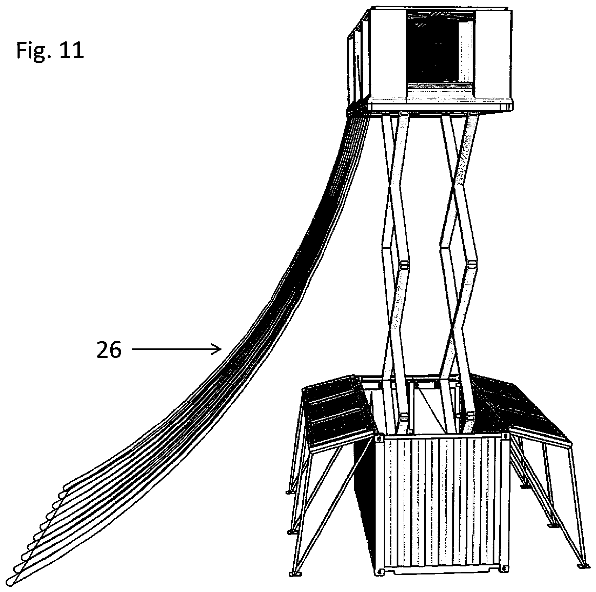

In an exemplary embodiment of the present power system the wind energy system has conical sides (see e.g. fig. 3). The conical sides provide extra wind flowing towards the wind turbine, and thereby increasing an energy yield. In combination, or as an alternative, the wind system comprises at least one air outlet at a top side thereof. The outlet provides extra suction and thus improves an energy yield further. In combination, or as an alternative, the wind system comprises wind directing elements (see e.g. fig. 11) for providing even more wind flow towards the turbine. The directing elements may be inflatable slides, such as e.g. used in airplanes for escaping.

In an exemplary embodiment of the obstruction means may be rotatable along a vertical or horizontal axis. If the position is fully controllable, e.g. when rotating, an optimal setting for a given wind condition can be found, thereby increasing the energy harvesting by a few percent. For hard wind conditions, such as storms, the obstruction means can largely block a duct. In an example the obstruction means can fully block a duct.

In an exemplary embodiment of the present power system a top side of the wind energy system comprises at least one curvature (see e.g. Fig. 5). The curvature as such provides water directing means; therewith any rain falling on the present system can be collected. Preferably a water uptake system, such as a gutter, is provided as well. The water uptake system may be attached to a lower side of the curvature, or if more curvature are present, to an more centrally located position. The water can be collected inside the container.

In an exemplary embodiment the present power system comprises a filter or a combined filter. The filter may be used to collect water and remove contaminant therefrom.

In an exemplary embodiment the present power system comprises supporting means for maintaining an at least one side wall when expanded provides in elevated position, therewith further providing shadow (see e.g. fig. 4). The shadow can be used for performing further activities. An example thereof is a nursery for growing e.g. vegetables and crops. It is noted that especially in sunny environments plants may need to be protected from sunshine. The supporting means also provide stability to the present system, such as rotational stability by preventing torsion, and positional stability e.g. when the wind is blowing hard. The supporting means may also contain anchors or the like.

In an exemplary embodiment the present power system comprises a transformer, for transforming the electrical energy, e.g. from DC to AC, and possibly also to a desired voltage, such as 220 V and 110 V, and/or to a desired frequency (e.g. 50 HZ or 60 Hz). Preferably the transformer is provided for a switch for selecting voltage and current. In an alternative, or in addition the present system may provide both AC (e.g. directly from the wind turbine) and DC (from the PV-system). For many applications/equipment DC is required, such as for mobile phones.

In an exemplary embodiment the present power system comprises at least one of a water pump, a water purifier, a water heating, a grainer, a mill, such as a corn mill, a washing machine, an antenna, a phone, a laptop, a cooking stove, a light source, a power storage, a refrigerator, a freezer, and a mirror. The examples indicate the flexibility of the present device and various uses thereof, as well as the modularity thereof.

In a second aspect the present invention relates to a use of the present system for at least one of baby day care, utility storage, back-up system, providing first aid, providing emergency care, providing medical diagnosis, providing medical care, and energy provision in a remote area. By making use of e.g. the internal part of the container, parts that are covered by side walls, parts that are covered by tent-like structures, a flexible care unit can be provided.

The invention will hereinafter be further explained with reference to the drawing of several figures which are exemplary and explanatory of nature and are not limiting the scope of the invention. To the person skilled in the art it will be clear that many variants are conceivable covered by the scope of protection defined by the appended claims.

### Brief description of the drawings

Figs. 1-13 show various details of the present integrated electric power system, relating to exemplary embodiments.

### Detailed description of preferred embodiments

### List of reference number

- 1:: Vertical Axis Wind Turbine
- 2:: Wind Inlet (Duct)
- 3:: Wind Energy System
- 4:: Duct wall for directing wind
- 5:: Rotatable wind obstruction means in turbine startup position
- 6:: Rotatable wind obstruction means in fully open position
- 7:: Rotatable wind obstruction means in closed position
- 8:: Top suction element
- 9:: Louvers for wind capturing and inducing laminar flow
- 10:: Side wall
- 11:: PV-system
- 12:: Wall for directing wind
- 13:: Support
- 14:: Elevation means
- 15:: Bottom side container
- 16:: Container
- 17:: Storage area
- 18:: Side wall optionally having doors
- 19:: Duct
- 20:: Wall for directing wind 12 including protection layer
- 21:: Wall for directing wind 12 including permeable material
- 22:: Wall for directing wind 12 including inflatable wall
- 23:: Wall for directing wind 12 having no wall
- 24:: Stand-alone integrated renewable electric power system
- 25:: Stack of containers/container carrier
- 26:: Inflatable slide for guiding wind flow
- 36:: Curvature
- 37:: Fabric

Figure 1 shows how wind in a wind energy system 3 is manipulated in terms of direction to enter the turbine 1 by 1) accelerated flow due to Venturi Effect, and 2) guided exactly in the part of the VAWT turbine where drag and lift provide largest contribution to total torque and energy output. The horizontal angles of the walls 4 including their shape take care of the guidance of the flow into the most contributing part. Fig. 1a shows a top cross sectional view and fig. 1b a front view.

Figure 2 shows how one or more diffuser or pitch control device(s) 5,6 are installed in front of and behind of the turbine to control the flow. This has the function to 1) increase the acceleration of flow on the most torque sensitive part of the VAWT to reduce the start-up time (position 5), 2) to open the stream with least resistance at times of regular flow (position 6), and 3) to block the flow (position 7) towards the turbine for protection in times of storms etc. The diffuser 5,6,7 may be at an angle of 0-90 degrees relative to a side wall. Figs. 2b-2d show three positions, in fig. 2b the diffuser is in startup position, in fig. 2c it is fully open and in fig. 2d it is fully closed.

Further the guiding walls 2,4 may be permeable to air in order to reduce pressure differences and vortices behind the wall and to permit less resistance to the entering flow.

Note that the guiding walls 4 in fig. 2 are positioned at an angle of about 45 degrees (relative to a side wall) whereas in figure 1 the walls are positioned at an angle of about 30 degrees. Also the walls of fig. 1 are longer compared to those of fig. 2. So walls may be positioned at an angle of 20 to 70 degrees (relative to a side wall) and have a length of 0.15 to 0.45 times a diagonal (the diagonal taken from a corner of the wind energy system to an opposing diagonal corner). Also note that the walls 2,4 may be straight, curved, etc.

Figure 3 shows that the present energy system is overhanging at an angle α. The overhanging and conical side wall 9 provides a fit with the wind flow vector to take in as much wind as possible with least resistance. The system rests on side wall(s) 10 having a certain height. Typically the side walls form part of the container or the like. As in other figures, parallel arrows indicate a wind direction.

In addition, or as an alternative, an opening 8 above or behind the VAWT in the roof element can open to create more suction and mass flow. The roof element may also be curved 36.

The present system ReWES®, or variants thereof such as PowerResponse™ and PowerVibes™, may be brought on location by a helicopter etc. It is preferably positioned in the dominant wind direction to capture most wind flowing by an optional series of turbines.

Fig. 3a shows a schematical view, fig. 3b having wind direction means 9 being capable of manipulation and in fig. 3c being in a fixed position/mode.

Figure 4 shows that ReWES is as a whole transported in a standard container unit 16 having a bottom 15 and may be partly foldable. There is some space 17 left (under the actual ReWES system) in the container before deployment. The space may be used to store a lifting device 14, supports of PV slabs, and plug-and-play devices, like energy storage, water pumps, and anything that is desired on site. The add-ons can be installed on request.

If the system becomes operable, the top of the container is opened. On at least one inside on the slabs PV panels 11 are provided and also 11 on the top of ReWES itself. The PV takes care to lift the system out of the container till it reaches full height. A fabric 37 may roll out between the wind energy system 3 and the container 16 to increase wind capturing.

In case of problematic conditions, such as weather, ReWES can be lowered back into the container housing.

The supports 13 of the PV slabs can be adjusted at the right angle depending on the location, and have double function to provide more structural stability to prevent tilting.

Figure 5 shows that the higher ReWES is lifted, the more wind it captures and the lift speed increases. The lifting device 14 is placed under ReWES and stays in place. After deployment, a large space 17 is created in the container 16 for other uses and functionality. A wall 12 for directing wind is provided in the wind energy system.

Rain water is collected on top of the roof top of ReWES, transported downwards, and used for needs.

The PV panels integrated in the roof top have higher efficiency due to wind cooling from the bottom.

Figure 6 shows a plan view of a deployed container 16. The container has doors 18, a lift, plugged in devices which are needed on site, and has further supports.

Figure 7 shows that the walls form ducts 19 to guide the flow into the three turbines in a controlled way. The walls may be replaced (or installed next to) by injection wings to have higher efficiency.

Figure 8 shows that the walls are either solid 20, permeable 21 to reduce resistance, inflatable to inject flow 22, or only consist of structural columns 23. The walls may be from a plastic, a polymer, a metal, and may be coated. In general, the PV panels can be any sort of panel, of foil or any type generating solar electricity.

Between ReWES and the container, a fabric 37 is stretched, rolled out, or placed to take in the upflow of the wind and increase wind capturing for wind energy generation. This fabric can have integrated PV cells to increase total energy output. A logo, shape, camouflaged, or (art) painting may be visible on the fabric for purposes like promotion, marketing, identification, warning signals, recognition etc.

The container itself may be disguised (also by fabric) to not look like a container for uses in urban areas, on roofs, or festivals etc.

Units (or modules) can be connected to provide more or direction independent energy in a grid connection offering the right solution for any use of location.

Figure 9 shows that during transportation on ships 25, the side walls of the containers 24 can be opened to generate energy from the side winds. A similar approach may be used for trucks, trains or any further type of transportation. A similar approach can be chosen for an means of transportation. During transportation a significant part of the transportation energy can be saved as such.

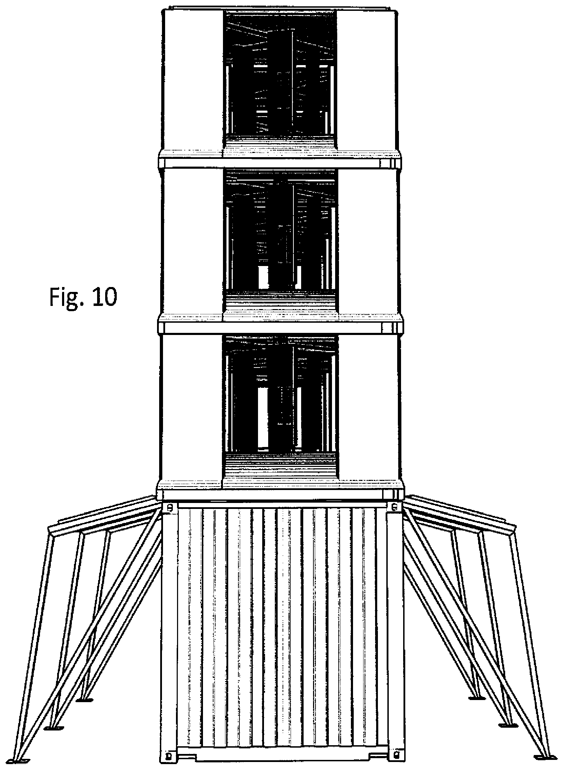

Figure 10 shows that inside ReWES a multiple of ReWES systems (e.g. 3) can be stacked to generate more energy in total.

Figure 11 shows that an inflatable device 26 like an airplane escape slide is installed in front of ReWES to capture and guide more wind into the turbine.

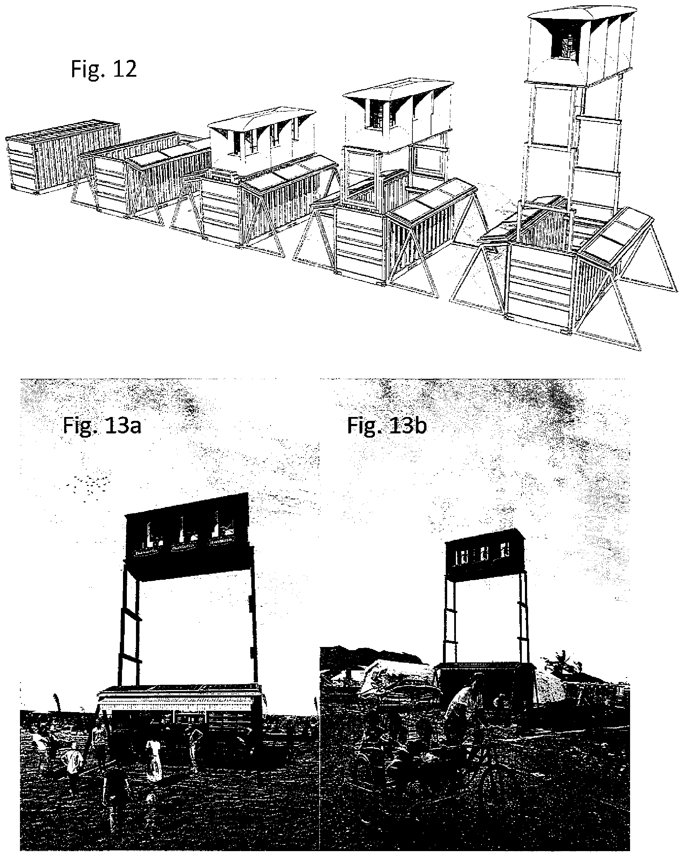

Figure 12 shows various stages of deployment of the present system. In an initial stage a fully equipped container is positioned. Thereafter sidewalls and top walls are expanded. The wind turbine and solar panels are elevated thereafter.

Figures 13a,b show artist impressions of the present system in use as a bar on a festival or the like and as a stand-alone energy system in a remote area, respectively.

It should be appreciated that for commercial application it may be preferable to use one or more variations of the present system, which would similar be to the ones disclosed in the present application.

## Claims

1. Stand-alone integrated renewable electric power system comprising a container (16),
when closed, inside of the container at least one wind energy system (3), attached to the wind energy system at least one PV-system (11), and
the container having on a side thereof at least one protection wall for the PV-system,
wherein the wind energy system comprises at least one wind turbine (1),
**characterized in that** the wind energy system further comprises duct defining elements (2,4) defining at least one duct comprising at least one air constriction member (2,4) for accelerating an air flow towards the at least one wind turbine, and
wherein the wind energy system comprises at least one obstruction means (5,6,7) per duct, the obstruction means being positionable in at least a start-up position (5), a free flow position (6), and closed position (7).

2. Stand-alone system according to claim 1, comprising a means for providing access to wind and sun, and at least one expandable wall.

3. Stand-alone system according to any of claims 1-2, further comprising at least one of an elevation means (14) for reversibly moving the wind energy system inside-outside, and an automated apparatus enabling self-deployment and concealment.

4. Stand-alone system according to any of claims 1-3, further comprising at least one PV-system on at least one expandable top wall.

5. Stand-alone system according to any of claims 1-4, further comprising at least one extendable side wall, the at least one extendable side wall comprising at least one PV-system.

6. Stand-alone system according to any of claims 1-5, wherein the wind energy system comprises at least one expansion member (2,4) for releasing an air flow from the wind energy system.

7. Stand-alone system according to claim 6, wherein the wind energy system comprises at least one constriction member (5,6,7) on each side thereof, respectively.

8. Stand-alone system according to claim 6 or 7 , wherein the at least one constriction member and at least one expansion member are symmetrical with respect to a center point or line of the wind energy system.

9. Stand-alone system according to any of claims 1-8, wherein the wind energy system has conical sides (9).

10. Stand-alone system according to any of claims 5-9, wherein the wind energy system has at least one air outlet (8) at a top side thereof and/or wind directing elements.

11. Stand-alone system according to any of claims 1-10, wherein a top side of the wind energy system comprises at least one curvature (36), and a water uptake system.

12. Stand-alone system according to claim 11, further comprising a filter or a combined filter.

13. Stand-alone system according to any of claims 1-12, further comprising supporting means (13) for maintaining an at least one side wall when expanded in elevated position, therewith providing shadow.

14. Stand-alone system according to any of claims 1-13, further comprising at least one of a transformer, a water pump, a water purifier, a water heating, a grainer, a mill, such as a corn mill, a washing machine, an antenna, a phone, a laptop, a cooking stove, a light source, a power storage, a refrigerator, a freezer, and a mirror.

15. Use of a stand-alone system according to any of claims 1-14, for at least one of baby day care, utility storage, backup system, providing first aid, providing emergency care, providing medical diagnosis, providing medical care, and energy provision in a remote area.

## Patentansprüche

1. Autarkes integriertes Stromversorgungssystem mit erneuerbaren Energien, das einen Container (16) umfasst, wobei dann, wenn dieser geschlossen ist, sich im Inneren des Containers mindestens ein Windenergiesystem (3) befindet, wobei an dem Windenergiesystem mindestens ein PV-System (11) befestigt ist, und der Container an einer Seite mindestens eine Schutzwand für das PV-System aufweist, wobei das Windenergiesystem mindestens eine Windturbine (1) umfasst, **dadurch gekennzeichnet, dass** das Windenergiesystem ferner kanaldefinierende Elemente (2, 4) umfasst, die mindestens einen Kanal definieren, der mindestens ein Luftverengungsorgan (2, 4) zum Beschleunigen einer Luftströmung in Richtung der mindestens einen Windturbine umfasst, und
wobei das Windenergiesystem mindestens ein Blockierungsmittel (5, 6, 7) pro Kanal umfasst, wobei die Blockierungsmittel in einer Inbetriebnahmeposition (5), einer Freiflussposition (6) und/oder einer geschlossenen Position (7) positioniert werden können.

2. Autarkes System nach Anspruch 1, das Mittel zum Bereitstellen des Zugriffs auf Wind und Sonne, und mindestens eine ausfahrbare Wand umfasst.

3. Autarkes System nach einem der Ansprüche 1-2, das ferner Höhenverstellmittel (14) zum reversiblen Bewegen des Windenergiesystems von Innen nach Außen und/oder eine automatisierte Vorrichtung, die Selbstbereitstellung und Verdeckung ermöglicht, umfasst.

4. Autarkes System nach einem der Ansprüche 1-3, das ferner mindestens ein PV-System auf mindestens einer ausfahrbaren oberen Wand umfasst.

5. Autarkes System nach einem der Ansprüche 1-4, das ferner mindestens eine ausfahrbare Seitenwand umfasst, wobei die mindestens eine ausfahrbare Seitenwand mindestens ein PV-System umfasst.

6. Autarkes System nach einem der Ansprüche 1-5, wobei das Windenergiesystem mindestens ein Ausdehnungsorgan (2, 4) zur Freigabe eines Luftstroms aus dem Windenergiesystem umfasst.

7. Autarkes System nach Anspruch 6, wobei das Windenergiesystem auf jeder Seite jeweils mindestens ein Verengungsorgan (5, 6, 7) umfasst.

8. Autarkes System nach Anspruch 6 oder 7, wobei das mindestens eine Verengungsorgan und das mindestens eine Ausdehnungsorgan symmetrisch bezüglich eines Mittelpunkts oder einer Mittellinie des Windenergiesystems sind.

9. Autarkes System nach einem der Ansprüche 1-8, wobei das Windenergiesystem konische Seiten (9) aufweist.

10. Autarkes System nach einem der Ansprüche 5-9, wobei das Windenergiesystem an seiner Oberseite mindestens einen Luftauslass (8) und/oder Windleitelemente aufweist.

11. Autarkes System nach einem der Ansprüche 1-10, wobei eine Oberseite des Windenergiesystems mindestens eine Krümmung (36) und ein Wasseraufnahmesystem umfasst.

12. Autarkes System nach Anspruch 11, das ferner ein Filter oder ein kombiniertes Filter umfasst.

13. Autarkes System nach einem der Ansprüche 1-12, das ferner Tragmittel (13) zum Halten mindestens einer Seitenwand, wenn sie in die erhöhte Position ausgefahren werden, umfasst, um damit Schatten bereitzustellen.

14. Autarkes System nach einem der Ansprüche 1-13, das ferner einen Transformator, eine Wasserpumpe, eine Wasserreinigungsvorrichtung, eine Wasserheizung, einen Drescher, eine Mühle, wie beispielsweise eine Getreidemühle, eine Waschmaschine, eine Antenne, ein Telefon, einen Laptop, einen Kochherd, eine Lichtquelle, einen Leistungsspeicher, einen Kühlschrank, einen Gefrierschrank und/oder einen Spiegel umfasst.

15. Verwendung eines autarken Systems nach einem der Ansprüche 1-14 für Baby-Tagesbetreuung, als Hilfsmittellager, Ersatzsystem, zum Bereitstellen von erster Hilfe, Bereitstellen von Notfallversorgung, Bereitstellen von medizinischer Diagnostik, Bereitstellen von medizinischer Betreuung und/oder für Energieversorgung in einem entfernten Bereich.

## Revendications

1. Système d'énergie électrique renouvelable intégré autonome, comprenant :
un conteneur (16),
quand le conteneur est fermé, au moins un système d'énergie éolienne (3) à l'intérieur du conteneur,
au moins un système photovoltaïque (11) fixé au système d'énergie éolienne, et le conteneur ayant sur un de ses côtés au moins une paroi de protection pour le système photovoltaïque,
le système d'énergie éolienne comprenant au moins une turbine éolienne (1),
le système étant **caractérisé en ce que** le système d'énergie éolienne comprend des éléments de définition de conduit (2, 4) qui définissent au moins un conduit comprenant au moins un élément d'étranglement d'air (2, 4) pour accélérer un flux d'air vers l'au moins une turbine éolienne, et
le système d'énergie éolienne comprenant au moins un moyen d'obstruction (5, 6, 7) par conduit, le moyen d'obstruction étant positionnable dans au moins une position de démarrage (5), une position d'écoulement libre (6) et une position fermée (7).

2. Système autonome selon la revendication 1, comprenant un moyen pour fournir un accès au vent et au soleil, et au moins une paroi extensible.

3. Système autonome selon l'une quelconque des revendications 1 et 2, comprenant en outre un moyen d'élévation (14) pour déplacer de manière réversible le système d'énergie éolienne vers l'intérieur ou l'extérieur et/ou un appareil automatisé permettant un déploiement et une dissimulation automatiques.

4. Système autonome selon l'une quelconque des revendications 1 à 3, comprenant en outre au moins un système photovoltaïque sur au moins une paroi supérieure extensible.

5. Système autonome selon l'une quelconque des revendications 1 à 4, comprenant en outre au moins une paroi latérale extensible, l'au moins une paroi latérale extensible comprenant au moins un système photovoltaïque.

6. Système autonome selon l'une quelconque des revendications 1 à 5, dans lequel le système d'énergie éolienne comprend au moins un élément d'extension (2, 4) pour libérer un flux d'air du système d'énergie éolienne.

7. Système autonome selon la revendication 6, dans lequel le système d'énergie éolienne comprend au moins un élément d'étranglement (5, 6, 7) respectivement sur chacun de ses côtés.

8. Système autonome selon la revendication 6 ou 7, dans lequel l'au moins un élément d'étranglement et au moins un élément d'extension sont symétriques par rapport à un point ou une ligne centrale du système d'énergie éolienne.

9. Système autonome selon l'une quelconque des revendications 1 à 8, dans lequel le système d'énergie éolienne a des côtés coniques (9).

10. Système autonome selon l'une quelconque des revendications 5 à 9, dans lequel le système d'énergie éolienne a au moins une sortie d'air (8) au niveau d'un de ses côtés supérieurs et/ou des éléments de direction de vent.

11. Système autonome selon l'une quelconque des revendications 1 à 10, dans lequel un côté supérieur du système d'énergie éolienne comprend au moins une courbure (36) et un système d'absorption d'eau.

12. Système autonome selon la revendication 11, comprenant en outre un filtre ou un filtre combiné.

13. Système autonome selon l'une quelconque des revendications 1 à 12, comprenant en outre un moyen de support (13) pour maintenir au moins une paroi latérale en position élevée en cas d'extension, de manière à fournir de l'ombre.

14. Système autonome selon l'une quelconque des revendications 1 à 13, comprenant en outre au moins un élément parmi un transformateur, une pompe à eau, un purificateur d'eau, un chauffage d'eau, un évaporateur de sel, un moulin, comme un moulin à grains, une machine à laver, une antenne, un téléphone, un ordinateur portable, un four de cuisson, une source de lumière, un stockage d'énergie, un réfrigérateur, un congélateur et un miroir.

15. Utilisation d'un système autonome selon l'une quelconque des revendications 1 à 14, pour au moins une utilisation parmi un soin quotidien de bébé, un stockage à la demande, un système de secours, fournir des premiers soins, fournir des soins d'urgence, fournir un diagnostic médical, fournir des soins médicaux et fournir de l'énergie dans des régions reculées.
